Europäisches Patentamt

European Patent Office

Office européen des brevets

(19)

(11) Publication number: **0 333 664**
**A2**

(12)

# EUROPEAN PATENT APPLICATION

(21) Application number: **89830021.5**

(22) Date of filing: **23.01.89**

(51) Int. Cl.4: **C 10 L 1/32**

(30) Priority: **18.03.88 IT 4774688**

(43) Date of publication of application:
**20.09.89 Bulletin 89/38**

(84) Designated Contracting States:
**AT BE DE ES FR GB GR LU NL SE**

(71) Applicant: **Mandarini, Renato**
**Via Gentile Bellini, 8**
**I-20146 Milano (IT)**

(72) Inventor: **Mandarini, Renato**
**Via Gentile Bellini, 8**
**I-20146 Milano (IT)**

(74) Representative: **Cicogna, Franco**
**Ufficio Internazionale Brevetti Dott.Prof. Franco Cicogna**
**Via Visconti di Modrone, 14/A**
**I-20122 Milano (IT)**

(54) **Method and apparatus for greatly reducing the fuel consume and environment polluting substances in internal combustion engines and combustion processes.**

(57) The apparatus comprises an electrolyzer consiting of a plurality of positive (14) and negative (15) stainless steel plates electrically coupled to the battery of a motor vehicle and thereto there is supplied water cleaned from calcareous substances and impurities, which water is decomposed into hydrogen and oxygen which are mild with the water so as to provide an emulsion comprising hydrogen and oxygen ions and hydrogen and oxygen molecules, a portion of the produced gases, in particular hydrogen, evolving under a collecting bell (11).

This mixture is led to the carburettor so as to join with the gasoline-air mixture and provide a perfect combustion of hydrocarbons, CO and carbon particles.

Fig. 2

EP 0 333 664 A2

Bundesdruckerei Berlin

## Description

# METHOD AND APPARATUS FOR GREATLY REDUCING THE FUEL CONSUME AND ENVIRONMENT POLLUTING SUBSTANCES IN INTERNAL COMBUSTION ENGINES AND COMBUSTION PROCESSES

## BACKGROUND OF THE INVENTION

The present invention relates to a method and apparatus for greatly reducing the fuel consume and environment polluting substances in internal combustion engines and combustion processes.

As is known is presently of great concern the atmosphere pollution,mainly caused by internal combustion engines and combustion processes in general.

The task of the present invention is that of solving the above mentioned problem by providing a method and apparatus for greatly reducing both environmental pollution and fuel consume by internal combustion engine.

Within the scope of the above task,a main object of the present invention is to provide an apparatus for improving the combustion process in internal combustion engines which can be easily applied to the motor vehicles.

## SUMMARY OF THE INVENTION

According to one aspect of the present invention, the above mentioned task and object,as well as yet other objects,which will become more apparent hereinafter, are achieved by a method and apparatus for improving the combustion process in internal combustion engines, heating systems and the like,characterized in that said method comprises the step of spraying into the fuel-burning air mixture finely atomized water,said water being at least partially decomposed into hydrogen and oxygen and emulsioned therewith so as to favour the removal of carbon oxide and other noxious and polluting substances deriving from the combustion of petroleum and its derivatives and fossil fuels,the apparatus for carrying out said method comprising an electrolyzer supplied with the water to be decomposed and adapted to provide an emulsion of said water with molecular hydrogen and oxygen and ionic state hydrogen and oxygen,this mixture being sent,either directly or indirectly,to the combustion place.

## BRIEF DESCRIPTION OF THE DRAWINGS

Further characteristics and advantages of the method and apparatus according to the present invention will become more apparent hereinafter from the following detailed description of a preferred embodiment of said apparatus,applied to an internal combustion engine of a motor vehicle,and being illustrated,by way of an indicative but not limitative example,in the accompanying drawings, where:

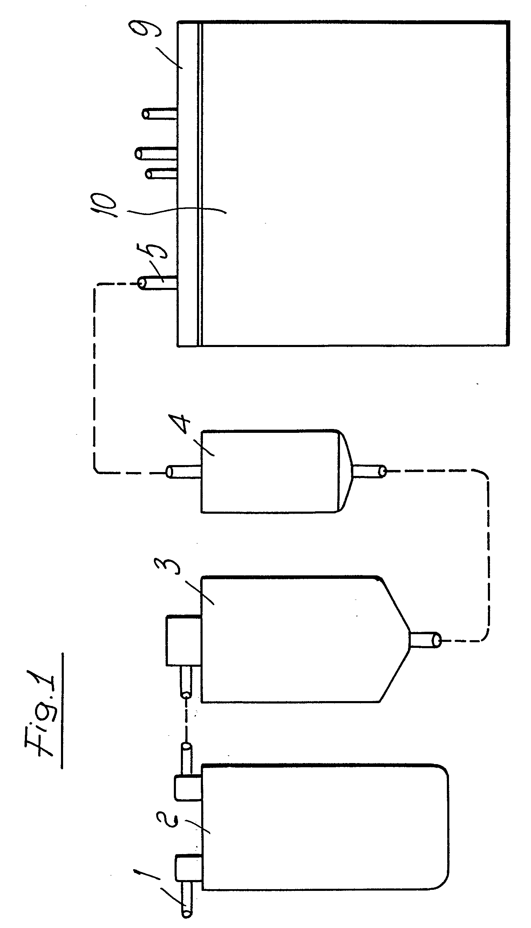

Figure 1 is a schematic view illustrating the main elements forming the apparatus according to the present invention;

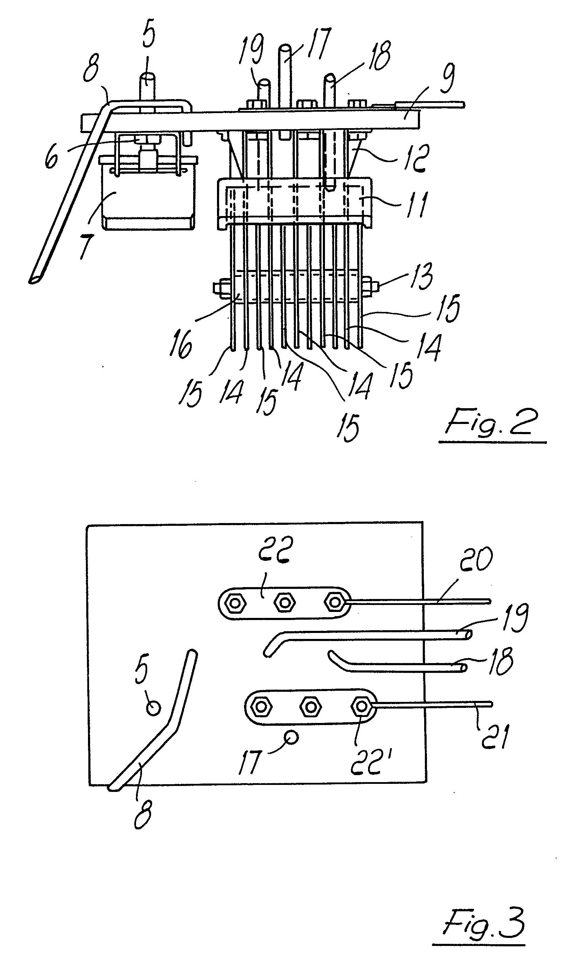

figure 2 is a detail front view illustrating the electrolyzer included in the apparatus according to the present invention;

figure 3 is a top plan view illustrating the electrolyzer therefrom the cover has been removed;

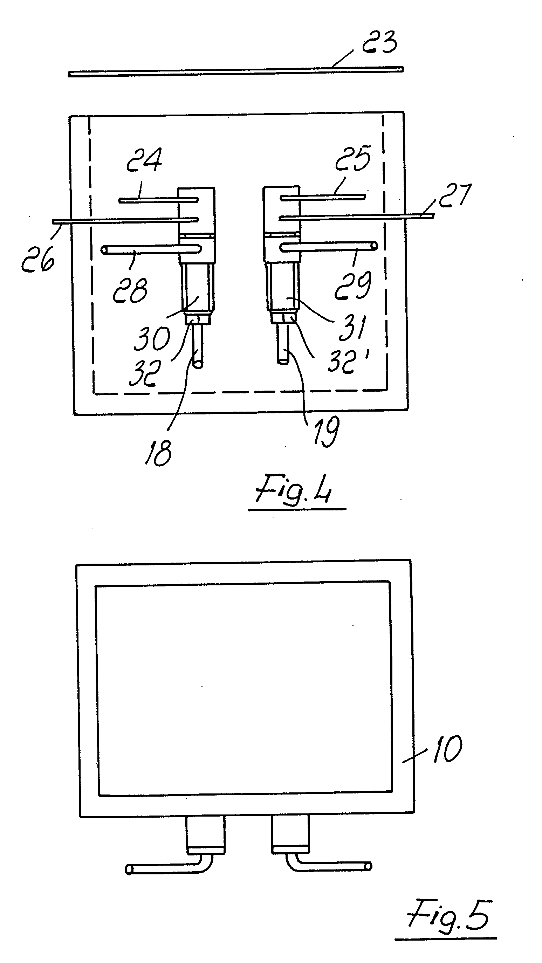

figure 4 is a side view of the elements forming the minimum flow rate solenoid valve and the maximum flow rate solenoid valve,for controlling the emulsioned water inflow to the carburettor;

figure 5 is a top plan view of the casing holding the elements of figure 4;

figure 6 is an exploded view of the component elements of each solenoid valve;
and

figure 7 is a top plan view of a gasket arranged at the bottom of the carburettor and of a related mixing grid.

## DESCRIPTION OF THE PREFERRED EMBODIMENT

With reference to the figures of the accompanying drawings,the apparatus for improving combustion processes according to the present invention,comprises a small tube 1 withdrawing water from a water tank (not shown) therethrough the water is sucked by means of a pump 2.

The thus withdrawn water is conveyed to a first filter 3 for removing calcareous substances and a second filter 4 adapted to hold impurities and,finally, by means of a tube 5,to the casing of an electrolyzer 10.

In this connection it should be pointed out that there is provided a valve 6,controlled by the float member 7,to hold the water level in the electrolyzer at a constant value.

As is shown,this electrolyzer comprises,as electrodes,two pluralities of stainless steel plates 14 and 15 which,as electrical current is caused to pass therethrough,electrolyze water,so as to transform said water into ionized water containing hydrogen and oxygen ions and emulsify water with molecular hydrogen and oxygen bubbles.

These hydrogen and oxygen bubbles, in particular, arrive at the surface under a collecting bell 11,therefrom extend two small tubes 18 and 19 which are connected with corresponding solenoid valves 30 and 31 communicating with the carburettor (not shown).

At the bottom of the carburettor there is provided a screening grid or net 43 for mixing the gasoline vapors with hydrogen, oxygen and emulsified water.

More specifically,to the cover 9 of the electrolyzer 10 there is affixed,through a supporting member 12,the mentioned collecting bell 11 which bears the electrode plates 14 and 15 which are coupled to said bell by means of a locking bolt 13 and insulating spacers 14.

From the small tube 17 there are recovered hydrogen vapors which evolve up to the surface of the water being emulsified in the electrolyzer 10,whereas the oxygen is held in emulsion by said water in a nearly complete way.

At the reference number 20 there has been shown the positive cable which carries electrical current from the motor vehicle battery to the plate member 22, coupled to the positive electrode plates 14,whereas at 21 there is shown the negative cable which supplies with current the plate member 22' coupled to the negative electrode plates 15.

Under the cover 9 of the electrolyzer 10, in particular,there is provided a suitable gasket 23 made of rubber.

At 24 and 25 there are shown negative cables coupled to the ground of the solenoid valves 30 and 31,whereas at 26 and 27 there have been indicated the corresponding positive cables.

At 28 there is shown the small tube carrying emulsified water to the position corresponding to the minimum flow rate of the carburettor,while at 29 there is shown the small tube carrying emulsified water to the place corresponding to the maximum flow rate of the carburettor,the reference 30 indicating the minimum solenoid valve while the reference 31 indicates the maximum solenoid valve.

The small tubes 18 and 19 for supplying said solenoid valves 30 and 31 are interexchangeable so as to provide different flow rate jets and are coupled to said solenoid valves by means of restraining nuts 32 and 32'.

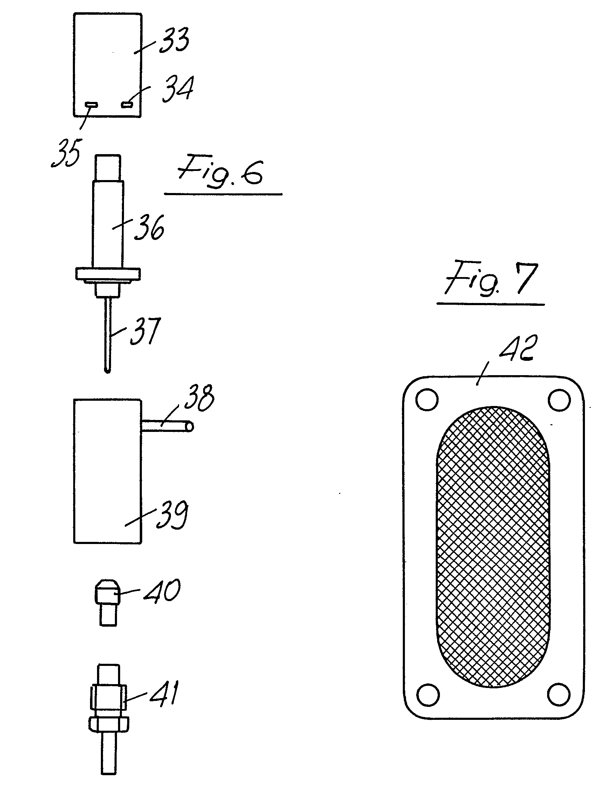

Each said solenoid valve,as shown in exploded form in figure 6,comprises a small block 33 enclosing a coil therethrough an adjustable electric current passes, which electromagnetically operates the valve.

At 34 there is shown the ground connection of this block and at 35 the current supplying connection to the coil.

At 36 there is shown the valve small cylinder for enabling and shutting off the emulsified water inflow.

At 37 there is shown an adjustable needle member closing on the valve seat and at 38 there is shown the emulsified water outlet tube leading to the carburettor.

At 39 there is shown a small block including the water passages and adjustable jet supporting members which can be adjusted by means of a bush 40 applied on the water inlet fitting 40.

In operation,the hydrogen gas introduced into the carburettor through the small tube 17 is mixed with gasoline vapors and,in cooperation with the oxygen evolved by emulsified water,arriving at said carburettor through the ducts 28 and 29,will remarkably increase the combustion temperature of the gasoline-air mixture, so as to completely burn the unburnt hydrocarbons,and reduce the gasoline consume,while removing carbon oxide and soot.

By way of example there are hereinbelow shown experimental results which have been surprisingly found with a motor vehicle Ritmo 70 S (of the company FIAT), with respect to the carbon oxide produced amount:

| at rpm's | 900 | CO = | 0.1% |
|---|---|---|---|
| " | 2,000 | CO = | 0.15% |
| " | 3,000 | CO = | 0.6% |
| " | 4,000 | CO = | 0.4% |
| " | 5,000 | CO = | 0.5% |
| " | 5,500 | CO = | 0.5% |

Thus,it should be apparent that the carbon oxide rate is 80% less than the conventional one,the rpm's being the same.

Accordingly,it will be possible to use 82-84 octane rating gasoline,instead of SUPER gasoline and, in addition,without tetraethyl lead,with a less consume.

Moreover no soot is detected at the discharge tube.

With respect to the electric power consume from the battery for supplying the electrolyzer it was very negligible,of the order of about 48 watts,corresponding to 4x12VA,with respect to the power saving due to the smaller fuel consume,owing to the perfect combustion of carbon oxide and carbon particles.

From the above disclosure it should be apparent that the invention fully achieves the intended task and objects.

While the invention has been disclosed and illustrated with reference to a preferred embodiment thereof,it should be apparent that the disclosed embodiment is susceptible to several modifications and variations all of which will come within the spirit and scope of the appended claims.

**Claims**

1- A method for improving combustion processes in general, in particular in an internal combustion engine, characterized in that said method comprises the step of spraying into the fuel-air mixture finely atomized water,said water being at least partially decomposed into oxygen and hydrogen and emulsified therewith so as to facilitate removal of carbon oxide and other noxious and polluting substances deriving from the combustion of petroleum and petroleum derivatives and fossil fuels.

2- An apparatus for carrying out the method according to claim 1,characterized in that said apparatus comprises an lectrolyzer supplied with water to be at least partially decomposed into oxygen and hydrogen,adapted to provide an emulsion of said water with molecular hydrogen and oxygen and ionic hydrogen and oxygen, said emulsion being supplied to the combustion place either directly or indirectly.

3- An apparatus according to claim 2,characterized in that said apparatus comprises conveying elements for conveying to a carburettor of an internal combustion engine said water emulsion,in the form of sprays or very fine particles,as well hydrogen and oxygen gases developed in said electrolyzer.

4- An apparatus according to claim 3, said apparatus being applied to a motor vehicle, characterized in that said apparatus comprises a pump for withdrawing water from a water tank carried on the motor vehicle and conveying said water to said electrolyzer, through a first and second filters, said electrolyzer comprising positive and negative electrode plates electrically coupled to a battery of said motor vehicle.

5- An apparatus according to claim 2, characterized in that said apparatus comprises a minimum flow rate valve and a maximum flow rate valve for controlling the emulsified water flow rate from said electrolyzer to said carburettor, said carburettor including at the bottom thereof a mixing grid.

*Fig.1*

EP 0 333 664 A2

EP 0 333 664 A2

Fig. 2

Fig. 3

23

24          25

27

26

28          29

30      31

32      32'

18      19

<u>Fig.4</u>

10

<u>Fig.5</u>

Fig. 6

Fig. 7